(19) Europäisches Patentamt / European Patent Office / Office européen des brevets

(11) **EP 4 345 970 A1**

(12) **EUROPEAN PATENT APPLICATION**
published in accordance with Art. 153(4) EPC

(43) Date of publication:
**03.04.2024 Bulletin 2024/14**

(21) Application number: **23825348.8**

(22) Date of filing: **11.01.2023**

(51) International Patent Classification (IPC):
$H01M\ 10/052^{(2010.01)}$     $H01M\ 4/36^{(2006.01)}$
$H01M\ 4/587^{(2010.01)}$     $H01M\ 4/48^{(2010.01)}$
$H01M\ 4/136^{(2010.01)}$     $H01M\ 4/58^{(2010.01)}$
$H01M\ 10/0567^{(2010.01)}$     $H01M\ 10/44^{(2006.01)}$
$H01M\ 4/04^{(2006.01)}$     $H01M\ 4/38^{(2006.01)}$

(52) Cooperative Patent Classification (CPC):
H01M 4/02; H01M 4/04; H01M 4/136; H01M 4/36;
H01M 4/38; H01M 4/48; H01M 4/58; H01M 4/587;
H01M 10/052; H01M 10/0567; H01M 10/44

(86) International application number:
**PCT/KR2023/000488**

(87) International publication number:
**WO 2023/249188 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.06.2022 KR 20220075481**

(71) Applicant: **LG Energy Solution, Ltd.**
**Seoul 07335 (KR)**

(72) Inventors:
• **KO, Young Jun**
  **Daejeon 34122 (KR)**
• **SUNG, Joo Hwan**
  **Daejeon 34122 (KR)**
• **JUNG, Kyung Hwan**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **LITHIUM SECONDARY BATTERY AND MANUFACTURING METHOD THEREFOR**

(57)     Disclosed herein relates to a lithium secondary battery and a manufacturing method thereof, wherein the lithium secondary battery has a high energy density by containing a silicon material as a negative electrode active material, and can not only lower an irreversible capacity loss that occurs due to the silicon material of a negative electrode during initial charging by having a polymer film derived from an electrolyte additive contained in an electrolyte composition provided on a positive electrode active layer, but also can improve the safety of the battery by suppressing gas generation during charging and discharging, so it can be usefully used as a power source for medium and large-sized devices such as electric vehicles.

**Description**

[Technical Field]

The present invention relates to a lithium secondary battery with excellent battery capacity and a manufacturing method thereof.

This application claims the benefit of priority based on Korean Patent Application No. 10-2022-0075481 filed on June 21, 2022, and all contents disclosed in the literature of the Korean Patent Application are included as part of this specification.

[Background Technology of the Invention]

As technology development and demand for mobile devices increase, the demand for secondary batteries as an energy source is rapidly increasing. Among these secondary batteries, lithium secondary batteries having high energy density and operating potential, long cycle life, and low self-discharge rate have been commercialized and widely used.

Recently, the demand for lithium secondary batteries with high capacity, high energy density, and low cost has increased as they are being used as a power source for medium and large-sized devices such as electric vehicles.

Carbon-based materials are mainly used as negative electrode materials for lithium secondary batteries, but negative electrodes made of carbon-based materials have a theoretical maximum capacity of 372 mAh/g (844 mAh/cc), so it has a limit to increase in capacity. In addition, lithium metal, which has been reviewed as a negative electrode material, has a very high energy density and can implement high capacity, but there are problems including safety issues due to dendrite growth during repeated charging and discharging and having a short cycle lifespan.

Therefore, using the negative electrode active material having a high energy density as a material that exhibits high capacity and can replace lithium metal has become inevitable, and many studies and proposals have been made for silicon, tin, or alloys thereof. In particular, silicon-based materials reversibly occlude and release lithium through a compound formation reaction with lithium, and have a theoretical maximum capacity of about 4200 mAh/g (9366 mAh/cc, specific gravity of 2.23), which is much greater than that of carbon-based materials, so it is promising as a high-capacity negative electrode material.

However, these negative electrode materials have a problem in that the initial efficiency is low and the irreversible capacity loss during initial charging and discharging is big. In order to improve this problem, research on irreversible positive electrode additives that can improve capacity during subsequent charge and discharge by supplementing lithium ions being lost due to irreversible reactions occurring in the negative electrode during initial charging has been actively conducted, and irreversible additives such as $Li_2NiO_2$, $Li_6CoO_4$ have been developed.

However, these conventional irreversible additives are generally prepared by reacting a precursor such as cobalt oxide or nickel oxide with an excess amount of lithium oxide. The irreversible additive prepared as such is structurally unstable, generating gas as charging proceeds, and the generated gas may act as one of the main factors causing deterioration in battery performance by causing volume expansion of an electrode assembly.

In addition, when stored at high temperatures of 60°C or higher after initial charge and discharge, the irreversible additive may transform into a thermally unstable structure. This can result in the release of additional gas and cause the battery to self-discharge.

Therefore, there is a need to develop a technology that can increase the energy density of a battery by using a silicon-based material as a negative electrode material, improve the irreversible capacity loss during the initial charging and discharging of the battery, and at the same time, overcome safety problems caused by internal gas generation.

[Prior Art Document]

[Patent Document]

Korean Patent Publication No. 10-2019-0056997

[Description of the Invention]

[Technical Problem]

Accordingly, the present invention is directed to provide a lithium secondary battery including a silicon material as a negative electrode material, reducing irreversible capacity loss during initial charging, and improving battery safety problems due to internal gas generation, etc., and a manufacturing method thereof.

[Technical Solution]

To solve the above-mentioned problems,

In an exemplary embodiment, the present invention provides a lithium secondary battery, the lithium secondary battery comprising:

> an electrode assembly comprising a positive electrode, a negative electrode, and a separator interposed between the positive electrode and the negative electrode; and
>
> an electrolyte composition comprising a non-aqueous organic solvent, a lithium salt, and an electrolyte additive,
>
> wherein the positive electrode has a structure in which a positive electrode active layer including a positive electrode active material and a polymer film are sequentially stacked on a positive electrode current collector,
>
> wherein the negative electrode comprises a negative electrode current collector, and a negative electrode active layer containing a carbon material and a silicon material as a negative electrode active material on the negative electrode current collector, and
>
> wherein a ratio (DC/CC) of an initial discharge capacity (DC) and an initial charge capacity (CC) of the lithium secondary batter is 0.7 to 1.2.

Here, the positive electrode may satisfy the following Equation 1 upon XPS analysis:

$$[\text{Equation 1}]$$

$$0.5 \leq P_C/P_N \leq 5$$

In Equation 1,

$P_C$ represents an intensity of the peak present at $284.0 \pm 0.5$ eV, and
$P_N$ represents an intensity of the peak present at $402.5 \pm 0.5$ eV.

In addition, the positive electrode comprises a positive electrode active layer containing a positive electrode active material, and the positive electrode active material may include an iron phosphate compound represented by Formula 1 below:

$$[\text{Formula 1}] \qquad LiFe_aM^1{}_{1-a}XO_4$$

In Formula 1,

$M^1$ is one or more elements selected from the group consisting of W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, and Mo,
X is one or more selected from the group consisting of P, Si, S, As, and Sb, and
a is $0 \leq a \leq 0.5$.

In addition, the electrolyte additive may be a polymeric compound containing nitrogen (N) and carbon (C).

As an example, the electrolyte additive may be a compound containing one or more of a pyrrole group or an aniline group.

Moreover, the electrolyte additive may be included in an amount of 0.01 to 5wt% based on a total weight of the electrolyte composition.

In addition, the polymer film may have an average thickness of 5nm to 500$\mu$m.

Furthermore, the negative electrode includes a carbon material and a silicon material as a negative electrode active material.

Here, the carbon material may include one or more of natural graphite, artificial graphite, expanded graphite, non-graphitizable carbon, carbon black, acetylene black, or ketjen black.

In addition, the silicon material may include one or more of silicon (Si), silicon carbide (SiC), or silicon oxide (SiO$_q$, where $0.8 \leq q \leq 2.5$), and its content may be 1 to 20wt% based on a total weight of the negative electrode active material.

In addition, in an exemplary embodiment, the present invention provides a manufacturing method of a lithium secondary battery, the manufacturing method comprising:
A manufacturing method of a lithium secondary battery, the manufacturing method comprising:

assembling a secondary battery by injecting an electrolyte in a battery case into which an electrode assembly comprising a positive electrode, a negative electrode, and a separator disposed between the positive electrode and the negative electrode is inserted; and
forming a polymer film on a positive electrode active layer containing a positive electrode active material by performing charging the assembled secondary battery to a SOC of 10% or more,
wherein the electrolyte composition comprises a non-aqueous organic solvent, a lithium salt, and an electrolyte additive,
wherein the negative electrode comprises a negative electrode current collector, and a negative electrode active layer containing a carbon material and a silicon material as a negative electrode active material on the negative electrode current collector, and
wherein the ratio (DC/CC) of an initial discharge capacity (DC) and an initial charge capacity (CC) of the lithium secondary battery is 0.7 to 1.2.

Here, the charging may be performed at a C-rate of 0.01C to 3.0C at 25 to 70°C.

[Advantageous Effects]

A lithium secondary battery according to the present invention has a high energy density by containing a silicon material as a negative electrode active material, can reduce irreversible capacity loss occurring during initial charging and discharging due to a silicon material of a negative electrode by having a polymer film derived from an electrolyte additive contained in an electrolyte composition provided on a positive electrode active layer, and can improve the safety of the battery by suppressing the generation of gas during charging and discharging, so it can be usefully used as a power source for medium and large-sized devices such as electric vehicles.

[Best Mode for Carrying Out the invention]

The present invention can apply various modifications and have various embodiments. Specific exemplary embodiments will be exemplified and described in detail in the detailed description.

However, it should be understood that the present invention is not limited to specific embodiments, and includes all modifications, equivalents or alternatives within the spirit and technical scope of the present invention.

The terms "comprise" or "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate, etc. is disposed "on" another part, this includes not only a case in which one part is disposed "directly on" another part, but a case in which a third part is interposed therebetween. In contrast, when a part of a layer, a film, a region or a plate, etc. is disposed "under" another part, this includes not only a case in which one part is disposed "directly under" another part, but a case in which a third part is interposed therebetween. In addition, in this application, "on" may include not only a case of disposed on an upper part but also a case of disposed on a lower part.

Also, in the present invention, "cross-sectional structure" means a structure of a plane perpendicularly cut with respect to the surface of the active material layer.

Hereinafter, the present invention will be described in more detail.

**Lithium secondary battery**

In an exemplary embodiment, the present invention provides a lithium secondary battery, the lithium secondary battery comprising:

an electrode assembly including a positive electrode, a negative electrode, and a separator interposed between the positive electrode and the negative electrode; and an electrolyte composition including a non-aqueous organic solvent, a lithium salt, and an electrolyte additive, wherein
the positive electrode sequentially includes a positive electrode active layer including a positive electrode active material and a polymer film on a positive electrode current collector,
the negative electrode includes a negative electrode active layer containing a carbon material and a silicon material as a negative electrode active material on a negative electrode current collector, and
the ratio (DC/CC) of an initial discharge capacity (DC) and an initial charge capacity (CC) of lithium secondary battery is 0.7 to 1.2.

The lithium secondary battery according to the present invention includes a positive electrode and a negative electrode, and includes a separator interposed between the positive electrode and the negative electrode. In addition, the positive electrode and the negative electrode have a structure impregnated with an electrolyte for the movement of lithium ions ($Li^+$) between them.

Here, the negative electrode includes a negative electrode active layer prepared by applying, drying, and pressing a negative electrode active material on a negative electrode current collector, and if necessary, may selectively further include a conductor, a binder, other additives, etc. in the negative electrode active layer.

The negative electrode active material may include a carbon material and a silicon material. The carbon material refers to a carbon material containing carbon atoms as a main component, and examples of the carbon material include graphite having a graphene structure completely formed as in natural graphite, soft carbon having a low-crystalline graphene structure (structure in which hexagonal honeycomb-shaped planes of carbons are arranged in a layered form), and hard carbon, artificial graphite, expanded graphite, carbon fiber, non-graphitizable carbon, carbon black, acetylene black, Ketjen black, carbon nanotube, fullerene, activated carbon, graphene, carbon nanotube, and the like in which these structures are mixed with amorphous portions, and preferably, may include one or more selected from the group consisting of natural graphite, artificial graphite, graphene, and carbon nanotube. More preferably, the carbon material includes natural graphite and/or artificial graphite, and may include one or more among graphene and carbon nanotubes together with the natural graphite and/or artificial graphite. In this case, the carbon material may include 50 parts by weight or less of graphene and/or carbon nanotube based on 100 parts by weight of the total carbon material, and more specifically, 1 to 40 parts by weight; or 5 to 20 parts by weight of graphene and/or carbon nanotube based on 100 parts by weight of the total carbon material.

In addition, the silicon material is a particle containing silicon (Si) as a main component as a metal component, and may include one or more among silicon (Si), silicon carbide (SiC), and silicon oxide ($SiO_q$, where $0.8 \leq q \leq 2.5$). As an example, the silicon material may include a mixture of silicon (Si) particles and silicon carbide (SiC). As another example, the silicon material may include silicon (Si) particles, silicon monoxide (SiO) particles, silicon dioxide ($SiO_2$) particles, or a mixture of these particles.

Moreover, the silicon material may have a form in which crystalline particles and amorphous particles are mixed together, and the ratio of the amorphous particles is 50 to 100 parts by weight, specifically 50 to 90 parts by weight; 60 to 80 parts by weight or 85 to 100 parts by weight based on 100 parts by weight of the total silicon material. In the present invention, by controlling the ratio of amorphous particles included in the silicon material within the above range, it is possible to improve thermal stability and flexibility of the electrode within a range that does not degrade electrical properties of the electrode.

In addition, the silicon material may be included in an amount of 1 to 20 parts by weight based on 100 parts by weight of the negative electrode active layer, specifically, 5 to 20 parts by weight; 3 to 10 parts by weight; 8 to 15 parts by weight; 13 to 18 parts by weight; 2 to 7 parts by weight; or 4 to 17 parts by weight based on 100 parts by weight of the negative electrode active layer.

By adjusting the content of the silicon material included in the negative electrode active material within the above range, the present invention can increase the energy density of the battery while suppressing an excessive volume expansion of the negative electrode due to the silicon material during charging and discharging.

Meanwhile, the positive electrode, like the negative electrode, includes a positive electrode active layer prepared by applying, drying, and pressing a positive electrode slurry containing a positive electrode active material and a positive electrode additive on a positive electrode current collector, and if necessary, the positive electrode active layer may selectively further include a conductor, a binder, other additives, etc.

Here, the positive electrode active material may include a compound containing iron (Fe) as an element, and in some cases may have a form doped with another transition metal ($M^1$). For example, the positive electrode active material may include an iron phosphate compound represented by Formula 1 below:

[Formula 1]    $LiFe_aM^1_{1-a}XO_4$

In Formula 1,

$M^1$ is one or more elements selected from the group consisting of W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, and Mo,

X is one or more selected from the group consisting of P, Si, S, As, and Sb, and
a is $0 \leq a \leq 0.5$.

Since the iron phosphate compound represented by Formula 1 has an olivine structure and has the best structural stability, it is a promising active material that has excellent lifespan characteristics and has an excellent advantage in terms of every safety including overcharge and overdischarge. In particular, the iron phosphate compound has excellent high-temperature stability due to the strong binding force of $PO_4$, has a lower cost than the above-mentioned $LiCoO_2$, $LiNiO_2$, or $LiMn_2O_4$ because it contains abundant and inexpensive iron, and has little effect on the environment due to its low toxicity.

In addition, since lithium metal oxide containing two or more of nickel (Ni), cobalt (Co), manganese (Mn), aluminum (Al), etc. exhibits a large voltage change during charging, polymerization of electrolyte additives contained in the electrolyte composition may not be stably implemented, and thus an internal short circuit of the battery may be induced. However, the iron phosphate compound represented by Formula 1 does not exhibit a large voltage change during charging and discharging, so that the polymerization of the electrolyte additive contained in the electrolyte composition can be stably implemented on the surface of the positive electrode, and accordingly, not only can an irreversible capacity loss generated during initial charging of the battery be lowered, but also the safety of the battery can be improved by suppressing the generation of gas during charging and discharging.

In addition, the content of the positive electrode active material based on 100 parts by weight of the positive electrode active layer may be 85 to 95 parts by weight, specifically 88 to 95 parts by weight, 90 to 95 parts by weight, 86 to 90 parts by weight, or 92 to 95 parts by weight.

In addition, the positive electrode active layer may further include a binder, a conductor, an additive, and the like along with the positive electrode active material.

As an example, the positive electrode active layer may include a conductor to improve performance such as electrical conductivity of the positive electrode, and as the conductor, one or more carbon-based materials selected from the group consisting of natural graphite, artificial graphite, graphene, carbon nanotubes, and carbon black, acetylene black, ketjen black, and carbon fiber may be used. For example, the conductor may include acetylene black.

In addition, the conductor may be included in an amount of 0.1 to 5 parts by weight based on 100 parts by weight of the positive electrode active layer, specifically may be included in an amount of 0.5 to 4 parts by weight; 1 to 3.5 parts by weight of a conductor; or 0.5 to 1.5 parts by weight.

Moreover, the positive electrode active layer may further include a binder to fix the positive electrode active material, conductor, etc. constituting the active layer, while implementing an adhesive force with the positive electrode current collector. Such a binder may include one or more resins selected from the group consisting of polyvinylidene fluoride- hexafluoropropylene copolymer (PVdF-co-HFP), polyvinylidene fluoride (PVdF), polyacrylonitrile, polymethylmethacrylate and copolymers thereof. As an example, the binder may include polyvinylidene fluoride.

In addition, the binder may be included in an amount of 1 to 10 parts by weight based on 100 parts by weight of the total positive electrode active layer, specifically 2 to 8 parts by weight; or 1 to 5 parts by weight of the total positive electrode active layer.

In addition, the average thickness of the positive electrode active layer is not particularly limited, but may be specifically $50 \mu m$ to $300 \mu m$, more specifically $100 \mu m$ to $200 \mu m$; $80 \mu m$ to $150 \mu m$; $120 \mu m$ to $170 \mu m$; $150 \mu m$ to $300 \mu m$; $200 \mu m$ to $300 \mu m$; or it may be $150 \mu m$ to $190 \mu m$.

In addition, as a positive electrode current collector, the positive electrode may use one having a high conductivity without causing chemical change in the battery. For example, stainless steel, aluminum, nickel, titanium, calcined carbon, etc. may be used, and in the case of aluminum or stainless steel, ones that are surface-treated with carbon, nickel, titanium, silver, or etc. may be used.

Furthermore, a polymer film is included on the positive electrode active layer. The polymer film is provided on the surface of the positive electrode by a polymerization of an electrolyte additive contained in the electrolyte composition during initial charging of the battery. Here, since the electrolyte additive releases electrons ($e^-$) through polymerization during initial charging, it can prevent lithium (Li) of the positive electrode active material from being consumed in the form of lithium ions ($Li^+$) on the surface of the negative electrode as it emits electrons ($e^-$). That is, in the process of the polymer film forming on the positive electrode active layer during initial charging of the battery, a silicon material, which is the negative electrode active material, forms an insulating inorganic film, for example, a solid electrolyte interphase (SEI) on the surface of the negative electrode, thereby minimizing the amount of ($Li^+$) being consumed, so the irreversible capacity of the positive electrode can be further increased. In addition, the polymer film may serve as a scavenger that removes moisture and/or acidic by-products, and through this, not only side reactions of the electrolyte solution may be reduced, but also the amount of gas generated during charging and discharging of the battery is significantly smaller compared to non-reversible additives such as $Li_2NiO_2$ and $Li_6CoO_4$ applied to compensate for conventional irreversible capacity loss, so there is an advantage in that the stability of the battery is excellent.

As an example, the lithium secondary battery according to the present invention may have a ratio (DC/CC) of an initial discharge capacity (DC) to an initial charge capacity (CC) satisfy 0.7 to 1.2, and may specifically satisfy 0.8 to 1.1; 0.9 to 1.2; or 0.9 to 1.1. This means that although the lithium secondary battery includes a silicon material as a negative electrode active material, the irreversible capacity of the positive electrode is increased, reducing irreversible capacity loss during initial charging and discharging of the battery, thereby improving the energy density of the battery.

These polymer films may be derived from electrolyte additives contained in the electrolyte composition during initial charging of the battery. Specifically, the electrolyte composition applied to the lithium secondary battery according to the present invention is a non-aqueous liquid electrolyte, and includes a non-aqueous organic solvent, a lithium salt, and an electrolyte additive for forming a polymer film.

Here, the electrolyte additive may be polymerized on the surface of the positive electrode during initial charging of the battery to form a polymer film. Specifically, the electrolyte additive may be a polymerizable compound including nitrogen (N), oxygen (O), sulfur (S), etc. having unshared electron pairs, along with carbon (C), as an element.

As an example, the electrolyte additive may be a polymerizable compound containing a nitrogen (N) element and a carbon (C) element, and more specifically, may be nitrogen-containing polymerizable compounds including one or more among a pyrrole group, a pyridine group, and an aniline group. Here, the polymerizable compound containing a pyrrole group, a pyridine group, and an aniline group is a compound having a pyrrole group, a pyridine group, and/or an aniline group as a parent nucleus, and it not only may include pyrrole, pyridine and/or aniline, but also may include derivatives in which substituents are introduced. For example, the nitrogen-containing polymerizable compound may include pyrrole, 2,5-dimethyl pyrrole, 2,4-dimethylpyrrole, 2-acetyl-N-methylpyrrole, 2-acetylpyrrole, N-methylpyrrole, N-methylaniline, N, N-dimethylaniline, phenylenediamine, P-toluidine, N,N-dimethyl-P-toluidine, 2-methylpyridine, 4-methylpyridine, and the like.

In this case, the positive electrode according to the present invention may satisfy the following Equation 1 upon XPS analysis:

$$[\text{Equation 1}]$$

$$0.5 \leq P_C/P_N \leq 5$$

In Equation 1,

$P_C$ represents an intensity of the peak present at $284.0 \pm 0.5$ eV, and
$P_N$ represents an intensity of the peak present at $402.5 \pm 0.5$ eV.

Equation 1 shows the ratio of peaks derived from components constituting the polymer film provided on the positive electrode active layer when X-ray photoelectron spectroscopy (XPS) analysis is performed on the initially charged positive electrode. Specifically, the $P_C$ is a peak representing the energy of a carbon-carbon double bond (C=C) among 1s bonds of carbon (C), and $P_N$ is a peak representing the bond (N-H$^+$) energy of the quarterary ammonium group among 1s bonds of nitrogen (N), and their ratio is a value representing the binding energy between oxidation by-products such as water ($H_2O$) and/or HF generated inside the battery during charging and discharging, and nitrogen elements of the polymer film. Their ratio may indicate the amount of water and/or oxidation by-products captured by the polymer film. By satisfying the lithium ion capture amount represented by Equation 1 within 0.5 to 5, the present invention can prevent internal gas generation due to oxidation by-products such as water ($H_2O$) and/or HF generated inside the battery during charging and discharging of the battery and suppress deterioration of the battery, so the safety and the lifespan of the battery can be improved, and through this, the energy density of the battery can be further improved. Here, the positive electrode of the present invention may satisfy Equation 1 within 0.5 to 4 ($0.5 \leq P_C/P_N \leq 4$), 0.5 to 3 ($0.5 \leq P_C/P_N \leq 3$), 1 to 5 ($1 \leq P_C/P_N \leq 5$), 1.5 to 5 ($1.5 \leq P_C/P_N \leq 5$), 2 to 5 ($2 \leq P_C/P_N \leq 5$), 3 to 5 ($3 \leq P_C/P_N \leq 5$), or 1 to 2 ($1 \leq P_C/P_N \leq 2$).

As another example, the electrolyte additive may be a polymerizable compound containing a sulfur (S) element and a carbon (C) element, and more specifically, may include a sulfur-containing polymeric compound such as a thiophene group, etc. Here, the polymerizable compound containing the thiophene group is a compound having the thiophene group as a nucleus, and it not only contains thiophene, but also may contain derivatives in which thiophene has a substituent introduced therein. For example, the sulfur-containing polymerizable compound may include halothiophene, 3,4-ethylenedioxythiophene, and the like.

In addition, the electrolyte additive may be applied in a range that does not degrade the performance of the electrolyte composition. Specifically, the electrolyte additive may be included in an amount of 0.01 to 5wt% based on the total weight of the electrolyte composition, more specifically, based on the total weight of the electrolyte composition 0.05 to 3wt%; 0.05 to 2wt%; 0.05 to 1.5wt%; 1.1 to 1.9wt%; 0.1 to 0.9wt%; or 0.8 to 1.4wt%.

In the present invention, by adjusting the content of the electrolyte additive within the above range, it is possible to prevent a polymer film from not being formed in a sufficient thickness on the surface of the positive electrode active layer due to a very small amount of the electrolyte additive, while preventing gelation of the electrolyte due to an excessive amount of the electrolyte additive.

In this sense, the thickness of the polymer film may satisfy a specific range. Specifically, the polymer film may have a thickness of 5nm to 500$\mu$m, more specifically, 5nm to 300$\mu$m; 100nm to 200$\mu$m; 500nm to 150$\mu$m; 900nm to 50$\mu$m; 1$\mu$m to 100$\mu$m; 5 nm to 900 nm; or 50 nm to 500 nm.

Meanwhile, the electrolyte composition including the electrolyte additive may include a non-aqueous organic solvent commonly used in the art and a lithium salt.

Specifically, the lithium salt may include one or more selected from the group consisting of $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, and $(FSO_2)_2NLi$.

The concentration of these lithium salts is not particularly limited, but the lower limit of the suitable concentration range is 0.5 mol/L or more, specifically 0.7 mol/L or more, more specifically 0.9 mol/L or more, or 1.2 mol/L or more, and upper limit is 2.5 mol/L or less, specifically 2.0 mol/L or less, more specifically 1.8 mol/L or less. When the concentration of lithium salt is less than 0.5 mol/L, the ionic conductivity decreases, resulting in degradation of cycle characteristics and output characteristics of non-aqueous electrolyte batteries, and there is a limit in that a non-uniform solid electrolyte film is formed because sufficient lithium ions ($Li^+$) are not supplied to form a solid electrolyte film (SEI) on the surface of the negative electrode active layer during initial charging of the battery. In addition, when the concentration of the lithium salt exceeds 2.5mol/L, the viscosity of the electrolyte for non-aqueous electrolyte battery increases, so there is a concern that the ion conductivity is also reduced, and that the cycle characteristics and output characteristics of the non-aqueous electrolyte battery may be reduced.

In addition, when a large amount of lithium salt is dissolved in a non-aqueous organic solvent at one time, the liquid temperature may rise due to the heat of dissolution of the lithium salt. In this way, when the temperature of the non-aqueous organic solvent is significantly increased due to the heat of dissolution of the lithium salt, in the case of the lithium salt containing fluorine, there is a concern in that hydrogen fluoride (HF) may be generated due to an acceleration in decomposition. Hydrogen fluoride (HF) is undesirable because it causes deterioration in battery performance. Accordingly, although the temperature at which the lithium salt is dissolved in the non-aqueous organic solvent is not particularly limited, it may be adjusted to -20 to 80°C, specifically 0 to 60°C.

In addition, the non-aqueous organic solvent used in the electrolyte composition may be applied without particular limitation as long as it is used in a non-aqueous electrolyte in the art. Specifically, as the non-aqueous organic solvent, for example, aprotic organic solvents such as N-methyl-2-pyrrolidinone, ethylene carbonate (EC), propylene carbonate, butylene carbonate, dimethyl carbonate (DMC), diethyl carbonate (DEC), gamma-butyrolactone, 1,2-dimethoxyethane (DME), tetrahydroxyfranc, 2-methyl tetrahydrofuran, dimethylsulfoxide, 1,3-dioxolane, formamide, dimethylform amides, dioxolane, acetonitrile, nitromethane, methyl formate, methyl acetate, phosphoric acid triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, ethyl propionate, etc. may be used.

In addition, the non-aqueous organic solvent used in the present invention may be used as a single type individually, and two or more types may be mixed in arbitrary combinations and ratios depending on its usage. Among these, in terms of their electrochemical stability against redox and chemical stability against reaction with heat or solute, propylene carbonate, ethylene carbonate, fluoroethylene carbonate, diethyl carbonate, dimethyl carbonate, and ethylmethyl carbonate are particularly preferred.

Moreover, the electrolyte composition further contains other additives in addition to the above-described basic components. Additives generally used in the non-aqueous electrolyte solution of the present invention may be added in an arbitrary ratio, without damaging the essence of the present invention. Specifically, compounds such as cyclohexylbenzene, biphenyl, t-butylbenzene, carbonate, vinylethylene carbonate, difluoroanisole, fluoroethylene carbonate, propanesultone, succinonitrile, dimethylvinylene carbonate, etc. that have an overcharge prevention effect, a negative electrode film-forming effect, and a positive electrode protective effect are exemplified. In addition, as in the case of being used in a non-aqueous electrolyte battery called a lithium polymer battery, it is also possible to solidify an electrolyte solution for a non-aqueous electrolyte battery using a gelling agent or a crosslinked polymer.

The lithium secondary battery according to the present invention has a high energy density by having the above-described configuration, and not only it can lower the risk of the irreversible capacity loss generated during initial charging and discharging due to the silicon material of the negative electrode, but also improve the battery safety by suppressing gas generation during charging and discharging, so it can be usefully used as a power source for medium and large-sized devices such as electric vehicles.

## Manufacturing method of lithium secondary battery

In addition, in an exemplary embodiment of the present invention, a manufacturing method of a lithium secondary battery according to the present invention described above is provided.

The manufacturing method of a lithium secondary battery according to the present invention assembles a secondary battery by injecting an electrolyte composition into a battery case into which an electrode assembly including a positive electrode, a negative electrode, and a separator disposed between the positive electrode and the negative electrode is inserted. An assembled secondary battery is initially charged, so that a polymer film can be formed on a positive electrode active layer including a positive electrode active material.

Specifically, the manufacturing method of the lithium secondary battery includes assembling a secondary battery by injecting an electrolyte composition into a battery case in which an electrode assembly including a positive electrode, a negative electrode, and a separator disposed between the positive electrode and the negative electrode is inserted; and forming a polymer film on the positive electrode active layer including the positive electrode active material by charging the assembled secondary battery to a SOC of 10% or more.

Here, the assembly of the secondary battery is a process including all processes of manufacturing an electrode assembly, inserting the manufactured electrode assembly into a battery case, and injecting an electrolyte composition, and a method commonly performed in the art is can be applied.

Moreover, the electrolyte composition injected into the battery case is a non-aqueous liquid electrolyte as described above, and has a configuration including a non-aqueous organic solvent, a lithium salt, and an electrolyte additive for forming a polymer film.

In addition, the negative electrode includes a negative electrode active layer prepared by applying, drying, and pressing a negative electrode active material on a negative electrode current collector as described above, and the negative electrode active layer includes a carbon material and a silicon material as a negative electrode active material.

Furthermore, the formation of a polymer film on the positive electrode active layer is initially charging the assembled secondary battery to form a polymer film in which the electrolyte additive is electrochemically polymerized on the positive electrode active layer. Accordingly, a polymer film derived from the electrolyte additive may be uniformly formed on the positive electrode active layer.

The initial charging is activating the battery while forming a solid electrolyte interface (SEI) on the surface of the negative electrode active layer by performing charging of the battery and removing the gas generated inside. In order to form a polymer film on the surface of the positive electrode active layer, the present invention may perform initial charging so that the SOC of the lithium secondary battery is 10% or more. More specifically, the initial charging may be performed within 10% to 90% of the SOC of the secondary battery; 10% to 80%; 10% to 70%; 10% to 50%; 10% to 40%; 30% to 80%; 40% to 80%; 50% to 90%; or 45% to 65%. The present invention prevents the polymer film from being formed due to a remarkably low potential of the battery by performing initial charging to satisfy the SOC in the above range, while preventing the occurrence of an internal short circuit during the formation of the polymer film due to the high SOC condition.

In addition, the initial charging may be performed under constant temperature and C-rate conditions. Specifically, the initial charging may be performed at a C-rate of 0.01 C to 3.0 C at 25 to 70°C, more specifically at a C-rate of 0.01-1.5C; 0.01~1.2C; 0.01~0.9C; 0.02~0.8C; or 0.05 to 0.9C at 30 to 65°C; 45~70°C; 25~50°C; or 30~50°C.

As an example, the initial charging may be performed at a charge end voltage of 3.0 to 4.2V and a C-rate of 0.05 to 0.08C at 40 to 45°C.

The polymer film can be formed when a certain level of oxidation potential is applied, but the polymerization efficiency or the efficiency of releasing electrons from lithium of the positive electrode active material may be different depending on the conditions while applying the potential, for example, temperature, C-rate, etc. Accordingly, by adjusting the charging temperature and C-rate within the above-described range while applying a potential lower than or equal to the oxidation potential required to form the polymer film during initial charging, the present invention may improve the battery capacity by minimizing the consumption of lithium of the positive electrode active material while providing a polymer film on the positive electrode active layer.

Meanwhile, the initial charging may refer to a process required for the SOC of the lithium secondary battery to reach the above range, and may be performed by including aging, thermal treatment, etc. before reaching the above SOC range.

[Mode for Carrying Out the invention]

Hereinafter, the present invention will be described in more detail by Examples and Experimental Examples.

However, the following Examples and Experimental Examples are merely illustrative of the present invention, and the contents of the present invention are not limited to the following examples.

**Examples and Comparative Examples. Preparation of lithium secondary battery**

An electrolyte composition was prepared by dissolving $LiPF_6$ as a lithium salt in a solvent in which ethylene carbonate (EC) and ethylmethyl carbonate (EMC) were mixed in a volume ratio of 30:70 at a concentration of 1.3±0.1M, and as shown in Table 1 below, by weighing and adding a polymerizable compound as an electrolyte additive based on the total weight of an electrolyte.

Separately, $LiFePO_4$ having a particle size of 5μm was prepared as a positive electrode active material; and was mixed with carbon black, which is a carbon-based conductor; and polyvinylidene fluoride, which is a binder, to N-methyl pyrrolidone (NMP) in a weight ratio of 94:3:3 to form a slurry, which was casted on a thin aluminum plate, dried in a vacuum oven at 120°C, and then rolled to prepare a positive electrode.

In addition, a negative electrode active material was prepared by mixing graphite (natural graphite: artificial graphite = 1:1, weight ratio) and silicon oxide ($SiO_q$, $1 \leq q \leq 2$) in a weight ratio of 85:15, and a slurry was formed by mixing 97 parts by weight of the negative electrode active material and 3 parts by weight of styrene-butadiene rubber (SBR) with water, cast on a thin copper plate, dried in a vacuum oven at 130°C, and then rolled to prepare a negative electrode.

A separator made of 18μm polypropylene was interposed between the positive and negative electrodes obtained above, inserted into a case, and as shown in Table 1 below, the prepared electrolyte composition was injected to assemble a lithium secondary battery.

Each assembled lithium secondary battery was initially charged. Specifically, an activated lithium secondary battery was prepared by initially charging the lithium secondary battery to a charge end voltage of 4.2V at 55±2°C under the conditions shown in Table 1 below.

[Table 1]

|  | Electrolyte additive | | Initial charging condition | |
| --- | --- | --- | --- | --- |
|  | Type | Content | SOC | C-rate |
| Example 1 | Pyrrole | 0.5 | 50% | 0.5C |
| Example 2 | Pyrrole | 1.0 | 50% | 0.5C |
| Example 3 | Pyrrole | 3.0 | 50% | 0.5C |
| Example 4 | Aniline | 1.0 | 50% | 0.5C |
| Comparative Example 1 | Pyrrole | 1.0 | 50% | 0.001C |
| Comparative Example 2 | Pyrrole | 1.0 | 50% | 3.5C |
| Comparative Example 3 | Pyrrole | 6.0 | 50% | 0.5C |
| Comparative Example 4 | Pyrrole | 1.0 | 10% | 0.5C |
| Comparative Example 5 | Pyrrole | 1.0 | 100% | 0.5C |

**Comparative Example 6. Preparation of lithium secondary battery**

A lithium secondary battery was prepared in the same manner as in Example 1, except that the electrolyte composition did not contain an electrolyte additive.

**Comparative Example 7. Preparation** of lithium **secondary battery**

A lithium secondary battery was prepared in the same manner as in Example 1, except that a positive electrode slurry containing $LiFePO_4$ having a particle size of 5μm as a positive electrode active material; carbon black as a carbon-based conductor; polyvinylidene fluoride as a binder; and lithium cobalt oxide ($Li_6CoO_4$) as an irreversible additive in a weight ratio of 94:3:2: 1 was used, and that the electrolyte composition did not contain an electrolyte additive.

**Experimental Example.**

In order to evaluate the effect of the positive electrode for a lithium secondary battery according to the present invention, the following experiments were performed.

a) Analysis of polymer film

Each lithium secondary battery prepared in Examples and Comparative Examples was disassembled to separate the positive electrode, and an X-ray photoelectron spectroscopy (XPS) was performed on the surface of the separated positive electrode to obtain an X-ray photoelectron spectroscopy spectrum. Here, XPS analysis was performed by using Thermo Fisher Scientific ESCALAB250 (acceleration voltage: 15kV, 150W, energy resolution: 1.0eV, area of analysis: diameter 500 micrometer, Sputter rate: 0.1nm/sec).

From the obtained spectrum, the intensity ratio ($P_C/P_N$) of the intensity of the peak ($P_C$) present at $284\pm0.5eV$ and the peak ($P_N$) present at $402.5\pm1.0eV$ were calculated, and the results were shown in the following Table 2.

b) Measurement of initial charging/discharging capacity and irreversible capacity of battery

As in Examples and Comparative Examples, each lithium secondary battery was assembled, and as shown in Table 1, the assembled lithium secondary batteries were initially charged to prepare activated lithium secondary batteries. Then, each activated lithium secondary battery was aged at $55\pm2°C$ for 5 to 10 minutes, and was fully charged at the charging end voltage of 4.2V under the same temperature condition to measure the initial charge capacity (CC). Thereafter, the initial discharge capacity (DC) was measured by discharging under conditions of 0.5C and discharging end voltage of 2.5V. From the measured initial charge/discharge capacity, the ratio (DC/CC) of the initial discharge capacity (DC) and the initial charge capacity (CC) was calculated, and the results were shown in Table 2 below.

[Table 2]

|  | $P_C/P_N$ | DC/CC |
|---|---|---|
| Example 1 | 1.6 | 0.81 |
| Example 2 | 1.7 | 0.87 |
| Example 3 | 1.8 | 0.93 |
| Example 4 | 2.1 | 0.95 |
| Comparative Example 1 | 1.1 | 0.48 |
| Comparative Example 2 | 1.5 | 0.61 |
| Comparative Example 3 | - | 0.45 |
| Comparative Example 4 | 1.2 | 0.51 |
| Comparative Example 5 | 1.4 | 0.59 |
| Comparative Example 6 | - | 0.22 |
| Comparative Example 7 | 0.4 | 0.85 |

As shown in Table 2, it can be seen that the lithium secondary battery according to the present invention, despite including silicon as the negative electrode active material, has an excellent electrical performance by having a low irreversible capacity loss during initial charging and discharging, and has a high stability by having a small amount of gas generated during charging and discharging.

Specifically, lithium secondary batteries prepared in the Examples had polymer films satisfying Equation 1 formed on the positive electrode active layer when analyzed by X-ray photoelectron spectroscopy (XPS), and it was confirmed that the ratio (DC/CC) of the initial discharge capacity (DC) and the initial charge capacity (CC) was high because the irreversible capacity loss was reduced during initial charging and discharging.

In contrast, in the lithium secondary battery of Comparative Example 1 including an excessive amount of electrolyte additives in the electrolyte composition, it was found that the electrolyte composition was gelled around the positive electrode active layer so that the polymer film was not formed, and accordingly, the ratio (DC/CC) of the initial discharge capacity (DC) and the initial charge capacity (CC) was remarkably low. In addition, similarly, in the case of polymer film that does not satisfy Equation 1 is formed on the positive electrode active layer during X-ray photoelectron spectroscopy (XPS) analysis, the ratio (DC/CC) of the initial discharge capacity (DC) and the initial charge capacity (CC) was confirmed to be significantly low by being less than 0.7.

This indicates that when a polymer film satisfying Equation 1 is formed on the positive electrode active layer, the irreversible capacity of the positive electrode increases during the initial charging of the battery, thereby reducing the irreversible capacity loss of the battery, and this means that the capacity and the energy density of the lithium secondary battery according to the present invention are excellent.

c) Measurement of gas generation

The lithium secondary batteries prepared in Examples 2 and 4 and Comparative Examples 6 and 7 were fixed in an oven equipped with a gas sensor, respectively, and were charged and discharged 50 times under a condition of 0.3C at 45°C, and the total amount of gas generated was measured. The results were shown in Table 3 below.

[Table 3]

| Unit: mL/g | Total amount of gas generated |
|---|---|
| Example 2 | 78.3 |
| Example 4 | 73.7 |
| Comparative Example 6 | 98.3 |
| Comparative Example 7 | 129.5 |

As shown in Table 3, it can be seen that the lithium secondary battery according to the present invention has a significantly small amount of gas generated inside the battery even when charging and discharging is performed.

Specifically, in the case of the lithium secondary battery of the Example in which a polymer film was provided on the positive electrode active layer to improve irreversible capacity loss occurring during initial charging and discharging of the secondary battery, it was confirmed that the amount of gas generated inside the battery was significantly low. On the other hand, the lithium secondary battery of the Comparative Example using the irreversible additive in the positive electrode showed a significantly large amount of gas generated as charging and discharging were repeatedly performed.

This means that the safety of the lithium secondary battery according to the present invention is high even when charging and discharging proceeds.

From these results, it can be known that the lithium secondary battery according to the present invention has a high energy density, not only can reduce the irreversible capacity loss occurring during initial charging and discharging due to the silicon material of the negative electrode, but also can improve battery safety by suppressing gas generation during charging and discharging.

As described above, the present invention has been described with reference to exemplary embodiments, but it should be understood by those skilled in the art or those of ordinary skill in the art that the present invention can be variously modified and changed without departing from the spirit and technical scope of the present invention described in the accompanying claims.

Therefore, the technical scope of the present invention should not be limited to the contents described in the detailed description of the specification, but should be defined by the claims.

**Claims**

1.　A lithium secondary battery, the lithium secondary battery comprising:

an electrode assembly comprising a positive electrode, a negative electrode, and a separator interposed between the positive electrode and the negative electrode; and

an electrolyte composition comprising a non-aqueous organic solvent, a lithium salt, and an electrolyte additive, wherein the positive electrode has a structure in which a positive electrode active layer including a positive electrode active material and a polymer film are sequentially stacked on a positive electrode current collector, wherein the negative electrode comprises a negative electrode current collector, and a negative electrode active layer containing a carbon material and a silicon material as a negative electrode active material on the negative electrode current collector, and

wherein a ratio (DC/CC) of an initial discharge capacity (DC) and an initial charge capacity (CC) of the lithium secondary battery is 0.7 to 1.2.

2.　The lithium secondary battery of claim 1, wherein the positive electrode satisfies the following Equation 1 upon XPS analysis:

[Equation 1]

$$0.5 \leq P_C/P_N \leq 5$$

In Equation 1,

$P_C$ represents an intensity of the peak present at 284.0±0.5 eV, and
$P_N$ represents an intensity of the peak present at 402.5±0.5 eV.

3. The lithium secondary battery of claim 1, wherein the electrolyte additive is a polymeric compound containing nitrogen (N) and carbon (C).

4. The lithium secondary battery of claim 1, wherein
the electrolyte additive is a compound containing one or more of a pyrrole group or an aniline group.

5. The lithium secondary battery of claim 1, wherein the electrolyte additive is included in an amount of 0.01 to 5wt% based on a total weight of the electrolyte composition.

6. The lithium secondary battery of claim 1, wherein the polymer film has an average thickness of 5nm to 500μm.

7. The lithium secondary battery of claim 1, wherein the positive electrode active material comprises an iron phosphate compound represented by Formula 1 below:

[Formula 1]        $LiFe_aM^1_{1-a}XO_4$

In Formula 1,

$M^1$ is one or more elements selected from the group consisting of W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, and Mo,
X is one or more selected from the group consisting of P, Si, S, As, and Sb, and
a is $0 \leq a \leq 0.5$.

8. The lithium secondary battery of claim 1, wherein the carbon material comprises one or more of natural graphite, artificial graphite, expanded graphite, non-graphitizable carbon, carbon black, acetylene black, or ketjen black.

9. The lithium secondary battery of claim 1, wherein the silicon material comprises one or more of silicon (Si), silicon carbide (SiC), or silicon oxide $SiO_q$, where $0.8 \leq q \leq 2.5$.

10. The lithium secondary battery of claim 1, wherein the silicon material is included in an amount of 1 to 20wt% based on a total weight of the negative electrode active material.

11. A manufacturing method of a lithium secondary battery, the manufacturing method comprising:

assembling a secondary battery by injecting an electrolyte composition in a battery case into which an electrode assembly comprising a positive electrode, a negative electrode, and a separator disposed between the positive electrode and the negative electrode is inserted; and
forming a polymer film on a positive electrode active layer containing a positive electrode active material by performing charging the assembled secondary battery to a SOC of 10% or more,
wherein the electrolyte composition comprises a non-aqueous organic solvent, a lithium salt, and an electrolyte additive,
wherein the negative electrode comprises a negative electrode current collector, and a negative electrode active layer containing a carbon material and a silicon material as a negative electrode active material on the negative electrode current collector, and
wherein the ratio (DC/CC) of an initial discharge capacity (DC) and an initial charge capacity (CC) of the lithium secondary battery is 0.7 to 1.2.

12. The manufacturing method of a lithium secondary battery of claim 11, wherein the charging is performed at a C-rate of 0.01C to 3.0C at 25 to 70°C.

## INTERNATIONAL SEARCH REPORT

| | International application No. |
|---|---|
| | **PCT/KR2023/000488** |

### A. CLASSIFICATION OF SUBJECT MATTER

**H01M 10/052**(2010.01)i; **H01M 4/36**(2006.01)i; **H01M 4/587**(2010.01)i; **H01M 4/48**(2010.01)i; **H01M 4/136**(2010.01)i; **H01M 4/58**(2010.01)i; **H01M 10/0567**(2010.01)i; **H01M 10/44**(2006.01)i; **H01M 4/04**(2006.01)i; **H01M 4/38**(2006.01)i

According to International Patent Classification (IPC) or to both national classification and IPC

### B. FIELDS SEARCHED

Minimum documentation searched (classification system followed by classification symbols)

H01M 10/052(2010.01); H01M 10/05(2010.01); H01M 10/0525(2010.01); H01M 10/0567(2010.01); H01M 4/13(2010.01); H01M 4/64(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극(cathode), 피막(coating), 규소(silicon), 피롤기(pyrrole group), 아닐린기 (aniline group), 피리딘(pyridine), 충전(charge)

### C. DOCUMENTS CONSIDERED TO BE RELEVANT

| Category* | Citation of document, with indication, where appropriate, of the relevant passages | Relevant to claim No. |
|---|---|---|
| X | KR 10-2015-0042091 A (SAMSUNG ELECTRONICS CO., LTD.) 20 April 2015 (2015-04-20)<br>See claims 1, 5, 8, 11-14, 17 and 20; paragraphs [0016]-[0038], [0074] and [0119]; and figure 1. | 1-12 |
| A | KR 10-2006-0062005 A (LG CHEM, LTD.) 09 June 2006 (2006-06-09)<br>See entire document. | 1-12 |
| A | KR 10-2012-0111272 A (LG CHEM, LTD.) 10 October 2012 (2012-10-10)<br>See entire document. | 1-12 |
| A | KR 10-1660091 B1 (LG CHEM, LTD.) 26 September 2016 (2016-09-26)<br>See entire document. | 1-12 |
| A | KR 10-2015-0015069 A (LG CHEM, LTD.) 10 February 2015 (2015-02-10)<br>See entire document. | 1-12 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **20 April 2023** | **20 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/000488**

| Patent document cited in search report | | | Publication date (day/month/year) | Patent family member(s) | | | Publication date (day/month/year) |
|---|---|---|---|---|---|---|---|
| KR | 10-2015-0042091 | A | 20 April 2015 | KR | 10-2013-0120865 | A | 13 October 2020 |
| | | | | US | 2015-0104716 | A1 | 16 April 2015 |
| | | | | US | 9799924 | B2 | 24 October 2017 |
| KR | 10-2006-0062005 | A | 09 June 2006 | KR | 10-0858415 | B1 | 11 September 2008 |
| KR | 10-2012-0111272 | A | 10 October 2012 | KR | 10-1278692 | B1 | 24 June 2013 |
| KR | 10-1660091 | B1 | 26 September 2016 | KR | 10-2015-0012833 | A | 04 February 2015 |
| KR | 10-2015-0015069 | A | 10 February 2015 | CN | 105247706 | A | 13 January 2016 |
| | | | | CN | 105247706 | B | 14 June 2019 |
| | | | | EP | 2988352 | A1 | 24 February 2016 |
| | | | | EP | 2988352 | A4 | 30 November 2016 |
| | | | | EP | 2988352 | B1 | 01 November 2017 |
| | | | | JP | 2016-524795 | A | 18 August 2016 |
| | | | | JP | 6485814 | B2 | 20 March 2019 |
| | | | | KR | 10-1574965 | B1 | 07 December 2015 |
| | | | | US | 2016-0133930 | A1 | 12 May 2016 |
| | | | | US | 9985287 | B2 | 29 May 2018 |
| | | | | WO | 2015-016554 | A1 | 05 February 2015 |

Form PCT/ISA/210 (patent family annex) (July 2022)

**EP 4 345 970 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220075481

- KR 1020190056997